# EUROPEAN PATENT SPECIFICATION

(11) **EP 0 616 620 B1**
(45) Date of publication and mention of the grant of the patent: **03.07.2002**
(21) Application number: 92915698.2
(22) Date of filing: 01.04.1992
(51) Int. Cl.: C08K 3/10, C08L 33/06, C04B 26/06, C04B 26/02, C04B 40/00, C04B 18/02

(54) **GRANITE-LIKE COATING**
GRANITARTIGE BESCHICHTUNG
REVETEMENT A L'ASPECT DE GRANITE

(30) Priority: 07.11.1991 US 788982
(43) Date of publication of application: 28.09.1994
(73) Proprietor: GHAHARY, Akbar, Ringwood, NJ 07456 (US)
(72) Inventor: GHAHARY, Akbar, Ringwood, NJ 07456 (US)
(74) Representative: Beresford, Keith Denis Lewis
(86) International application number: PCT/US92/02600
(87) International publication number: WO 93/09170

(56) References cited:
- EP-A- 0 362 884
- WO-A-89/01504
- US-A- 4 085 246
- US-A- 4 543 366
- US-A- 4 664 982
- US-A- 5 028 459
- Römpp Chemie Lexikon, 9th dition (1990), page 1511
- Chambers Science and Technology Dictionary (1988), page 483
- McGraw-Hill Encyclopedia of Chemistry (1983), pages 413 and 414
- Ullmann's Encyclopedia of Industrial Chemistry, Fifth edition, volume A 18 (1991), pages 399 and 400
- Ullmann's Encyclopedia of Industrial Chemistry, Fifth edition, volume A 21 (1992), pages 217 to 221

## Description

### Background of the Invention

The present invention relates generally to a composition of matter useful in forming a granite-like coating and to a method for forming an article having a granite-like coating.

Processes currently exist for forming synthetic materials and surfaces which give the appearance of or simulate various natural substances such as stone, marble and the like. Such materials are commonly used in the manufacture of floor and other types of tiles, countertops, sinks, architectural facings, ornamental objects, and generally for any other purpose that marble, stone or the like are used.

One example is a process utilizing a laminated sheet of material marketed under the trademark FORMICA. Such material is formed in large sheets and then cut and applied to the desired surface by adhesive or the like. Such sheets can be manufactured in solid colors or in various patterns, some of which simulate various stone or other textured material. Another example is a process for preparing a material which is commonly referred to as "cultured marble". "Cultured marble" is formed by first creating a mould of a desired shape, spraying the internal mould surface with a gel coat and then filling the mould with a conventional casting resin. Pigments are added to the resin to give it the desired colour or pattern. After the resins have set, the mould is removed with the surface facing the mould forming the outer surface of the finished product.

Although many of the prior art methods for creating synthetic surfaces simulating stone and the like are generally acceptable, there is a continuing effort to develop new and more desirable or pleasing patterns as well as patterns which more closely simulate the various natural materials such as stone, granite and the like. Accordingly, there is a continuing need and desire to improve upon existing methods.

For example, US patent specification no. 5 043 377 relates to an artificial stone composition comprising a matrix and chips dispersed in that matrix. The matrix resins are addition polymers of trimethylol propane trimethacrylate. The chips are made from the same or a different resin and, in the cured state, are of the same or similar density as the cured matrix resin.

PCT patent specification no. 89/1504 describes unspecified polyester resins encasing aluminium trihydrate (as flame retardant), which are cured and added, in the particulate form, to the matrix without modifying the matrix by direct addition of the aluminium trihydrate, so that a uniform mixture is maintained that can be used to make a simulated mineral article.

The subject invention provides a spray granular coating that mimics the look of granite. The invention is particularly useful in that it can be either sprayed directly onto a surface as a final over-spray or can be sprayed on the inside surface of a mould and then backed with a fibreglass or resin-type substrate.

### Summary of the invention

The present invention relates to a composition useful for forming a granite-like coating, which composition comprises:
(a) a gel coat resin comprising an ethylenically unsaturated polyester resin based on isophthalic acid;
(b) granules of the polyester resin of (a) in premade form; and
(c) aluminum trihydrate, said aluminium trihydrate being present in an amount not greater than 50 percent by weight of the total composition;
the polyester granules (b) having substantially the same density as the gel coat resin (a) when admixed with component (c).

Articles made using the above composition display a number of desirable aesthetic and physical properties which have not previously been achieved with sprayable materials. Materials formed in accordance with the present invention more closely simulate granite or the like, while at the same time provide a surface which is very pleasing and one which is durable, repairable and capable of relatively high heat resistance.

### Detailed Description of the Invention

The present composition provides a sprayable coating which mimics the appearance of granite. The coating is comprised of three components. The first is a gel coat resin. The gel coat resins employed in the present invention are polymerisable unsaturated polyester resins. Such resins or resin blends are available through a variety of sources and are generally known in the art. The ethylenically unsaturated polyester resins used herein are based on the reaction of isophthalic acid with polyhydric alcohol, for example neopentyl glycols. The unsaturated polyester resins of the present invention can be cured or hardened by reaction with styrene.

The granules, comprising the second component of the compositions of the present invention, are mixed into the gel coat resin before the hardening of the gel coat resin The granules are premade from the same styrated unsaturated polyester resin, as is used for the gel coat resin, but in crosslinked comminuted form. The granules have properties as the unsaturated polyester resin, i.e., the same resistance, same specific gravity, etc. By having similar properties, the granules remain evenly dispersed and suspended in the gel coat. It may be necessary during the formation of the granules to mix the base resin with a filler in order to obtain finished granules possessing similar properties as the gel coat resin.

Although the granules provide a "granite-like" stone appearance, they do not change the overall transparent characteristic of the gel coat resin. Accordingly, the compositions of the present invention contain as a third component a filler composition. Typically the filler composition comprises aluminum trihydrate (ATH) with or without a pigment. The pigment filler is added to mask the colorations of the surface to be sprayed, or in the case of a mold application, the coloration of the backing material in the mold. Although any pigmented filler having a specific gravity close to that of the granules used is acceptable, it has been found that for the size of the granules preferred, ATH provides the best specific gravity match and also provides a good white color. In accordance with the present invention, the inventor has found that up to 50% by weight, and preferably between about 25% and 50% by weight, of alumina trihydrate may be added to the resin.

The resin system also may include other tinting pigments, fillers and/or other components for the purpose of providing background colorant to the material and/or providing certain properties and characteristics to the resin system during formation and after it has cured. For example, titanium dioxide or any one of various other pigments can be added for additional color. Certain materials may be added for the purpose of reducing the coefficient of thermal expansion of the cured system or providing such system with various other desired properties. One embodiment of the present method contemplates the addition of a filler such as alumina trihydrate to provide fire retardancy to the end product.

It is also contemplated that certain components can also be added to the resin system to control the viscosity and/or the thixotropy of the resin system or matrix.

The coating produced in accordance with the present invention is essentially a transparent coating having a sufficient amount of aluminum trihydrate therein to mask the color of the object being coated.

Moreover the coating resin of the present invention is more stable at temperatures at which normal gel coat resins break down. It is contemplated that this increased stability is due to the thermal conductivity and thermal dissipation provided by the aluminum tri hydrated within the coating. Additionally the coating obtained with the compositions of the present invention has a higher impact strength than those coatings obtained with resins currently on the market. In testing done to date, the coatings obtained with the composition of the present invention have been shown to be approximately two times as strong in impact strength as coatings obtained with currently available compositions. The coatings obtained with the compositions of the present invention also exhibit a hardness which is greater than that obtained with coatings using conventional resins.

The components of the composition of the present invention are mixed and then sprayed through conventional spraying apparatus in conjunction with a hardener. Such spraying mechanisms are not described here in detail but are commonly known to those skilled in the coating art.

## Claims

1. A composition useful for forming a granite-like coating, which composition comprises:
(a) a gel coat resin comprising an ethylenically unsaturated polyester resin based on isophthalic acid;
(b) granules of the polyester resin of (a) in premade form; and
(c) aluminum trihydrate, said aluminium trihydrate being present in an amount not greater than 50 percent by weight of the total composition;
the polyester granules (b) having substantially the same density as the gel coat resin (a) when admixed with component (c).

2. A composition according to claim 1, wherein the amount of aluminium trihydrate is from 25 to 50% w/w.

3. A composition according to claim 1 or claim 2, wherein the granules contain a filler to achieve substantially the same density as the gel coat containing the aluminum trihydrate.

4. A composition according to any preceding claim, wherein the unsaturated polyester resin is based on isophthalic acid and neopentyl glycol.

5. A method for forming an article having a granite-like coating, which method comprises spraying onto the article or onto a mould forming the article, a composition according to any preceding claim and a hardener, and curing or allowing the composition to cure.

## Patentansprüche

1. Zusammensetzung zum Bilden einer granitähnlichen Beschichtung, bestehend aus:
(a) einem Gel-Beschichtungsharz aus einem äthylenisch ungesättigten Polyesterharz, basierend auf Isophthalsäure;
(b) vorgefertigten Polyesterharzkörnchen aus (a); und
(c) Aluminiumtrihydrat, dessen Menge 50% des Gewichts der GesamtZusammensetzung nicht übersteigt;
wobei die Polyesterkörnchen (b) im wesentlichen die gleiche Dichte wie das Gel-Beschichtungsharz (a) gemischt mit der Komponente (c) aufweisen.

2. Zusammensetzung nach Anspruch 1, wobei die Menge des Aluminiumtrihydrats 25 bis 50 % w/w beträgt.

3. Zusammensetzung nach Anspruch 1 oder 2, wobei die Körnchen ein Füllmittel enthalten, um im wesentlichen die gleiche Dichte wie die Gelbeschichtung mit Aluminiumtrihydrat zu erreichen.

4. Zusammensetzung nach einem der vorhergehenden Ansprüche, wobei das ungesättigte Polyesterharz auf Isophthalsäure und Neopentylglycol basiert.

5. Verfahren zum Bilden eines Gegenstands mit einer granitähnlichen Beschichtung, wobei eine Zusammensetzung, nach einem der vorhergehenden Ansprüche, und ein Aushärter auf den Gegenstand oder in eine den Gegenstand formende Form gesprüht werden und die Zusammensetzung ausgehärtet oder aushärten gelassen wird.

## Revendications

1. Composition utile pour former un revêtement semblable à du granit, cette composition comprenant :
(a) une résine de revêtement de type gel comprenant une résine polyester à insaturation éthylénique à base d'acide isophtalique ;
(b) des granules de résine polyester de (a) sous forme préfabriquée ; et
(c) du trihydrate d'aluminium, ce trihydrate d'aluminium étant présent en une quantité au plus égale à 50% en poids de la composition totale ;
les granules de polyester (b) ayant sensiblement la même densité que la résine de revêtement de type gel (a) lorsqu'ils sont mélangés au composé (c).

2. Composition selon revendication 1, dans laquelle la quantité de trihydrate d'aluminium est de 25 à 50% en poids/poids.

3. Composition selon la revendication 1 ou la revendication 2, dans laquelle les granules contiennent une charge, de façon à avoir sensiblement la même densité que le revêtement de type gel contenant le trihydrate d'aluminium.

4. Composition selon l'une quelconque des revendications précédentes, dans laquelle la résine polyester insaturé est à base d'acide isophtalique et de néopentyl glycol.

5. Procédé pour fabriquer un article ayant un revêtement semblable à du granit, ce procédé comprenant la pulvérisation sur l'article ou dans un moule pour la formation de l'article, d'une composition selon l'une quelconque des revendications précédentes et d'un durcisseur, et le durcissement ou bien l'étape consistant à laisser le durcissement s'effectuer.
